# EUROPÄISCHE PATENTSCHRIFT

(11) **EP 0 763 571 B1**
(45) Veröffentlichungstag und Bekanntmachung des Hinweises auf die Patenterteilung: **31.10.2001**
(21) Anmeldenummer: 96113729.6
(22) Anmeldetag: 28.08.1996
(51) Int. Cl.: C09B 67/22, B41M 5/38, C09B 23/04

(54) **Farbmischungen, enhaltend Methin- und Anthrachinonfarbstoffe**
Dye mixtures containing methine and anthraquinone dyes
Mélanges de colorants contenant des colorants méthiniques et anthraquinoniques

(30) Priorität: 07.09.1995 DE 19533026
(43) Veröffentlichungstag der Anmeldung: 19.03.1997
(73) Patentinhaber: BASF AKTIENGESELLSCHAFT, 67056 Ludwigshafen (DE)
(72) Erfinder: Etzbach, Karl-Heinz, Dr., 67227 Frankenthal (DE); Sens, Rüdiger, Dr., 68165 Mannheim (DE)

(56) Entgegenhaltungen:
- EP-A- 0 416 434
- EP-A- 0 569 784
- EP-A- 0 591 736
- EP-A- 0 680 834
- DE-A- 4 403 083
- US-A- 5 132 268

## Beschreibung

Die vorliegende Erfindung betrifft neue Farbstoffmischungen, enthaltend einen oder mehrere Pyridonfarbstoffe der Formel I 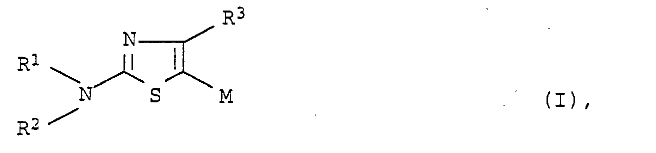 in der
- M: für einen Rest der Formel 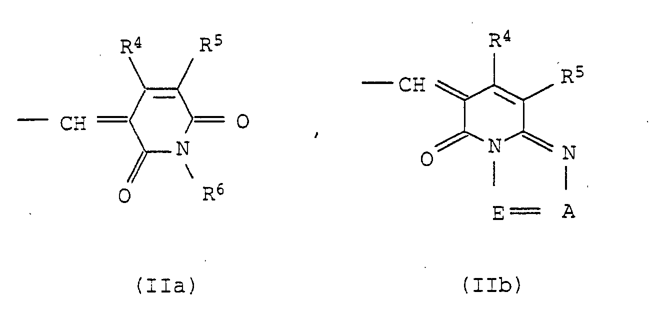 oder 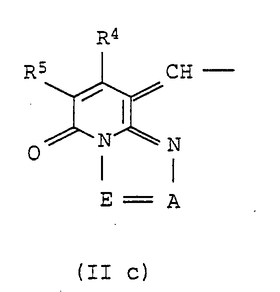 steht,
- R¹ und R²: unabhängig voneinander jeweils C₁-C₁₀-Alkyl, das gegebenenfalls durch C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder R¹ und R² zusammen mit dem die verbindenden Stickstoffatom einen 5- oder 6-gliedrigen gesättigten heterocyclischen Rest, der weitere Heteroatome aufweisen kann,
- R³,: wenn M ein Rest der Formel IIa ist, tert-Butyl oder tert-Pentyl, oder wenn M ein Rest der Formel IIb oder IIc ist, C₃-C₁₀-Alkyl, C₅-C₇-Cycloalkyl, gegebenenfalls durch C₁-C₄-Alkyl, C₁-C₄-Alkoxy, Halogen oder Nitro substituiertes Phenyl oder Thienyl,
- R⁴: Wasserstoff, C₁-C₆-Alkyl oder gegebenenfalls durch C₁-C₄-Alkyl, C₁-C₄-Alkoxy, Halogen oder Nitro substituiertes Phenyl,
- R⁵: Cyano, Carbamoyl, C₁-C₈-Mono- oder Dialkylcarbamoyl, Carboxyl, C₁-C₈-Alkoxycarbonyl oder Benzimidazolyl,
- R⁶: C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl, gegebenenfalls durch C₁-C₄-Alkyl, C₁-C₄-Alkoxy, Halogen oder Nitro substituiertes Phenyl, oder einen Rest der Formel NB¹B², worin B¹ und B² unabhängig voneinander jeweils für Wasserstoff, C₁-C₁₀-Alkyl, gegebenenfalls durch C₁-C₄-Alkyl, C₁-C₄-Alkoxy, Halogen oder Nitro substituiertes Phenyl, C₁-C₉-Alkanoyl, C₁-C₈-Alkylsulfonyl, gegebenenfalls durch C₁-C₄-Alkyl, C₁-C₄-Alkoxy, Halogen oder Nitro substituiertes Phenylsulfonyl, Pyridylsulfonyl, gegebenenalls durch C₁-C₄-Alkyl, C₁-C₄-Alkoxy, Halogen oder Nitro substituiertes Benzoyl, Pyridylcarbonyl oder Thienylcarbonyl stehen, und
einer der beiden Reste A oder E Stickstoff und der andere einen Rest der Formel C-R⁷, worin R⁷ für C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy, Halogen oder Nitro substituiertes Phenyl steht, bedeuten, sowie einen oder mehrere Anthrachinonfarbstoffe der Formel III 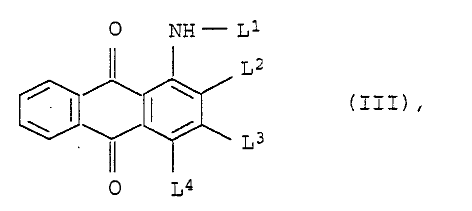
in der
- L¹: Wasserstoff, C₁-C₁₀-Alkyl oder gegebenenfalls durch C₁-C₄-Alkyl, C₁-C₄-Alkoxy, Halogen oder Nitro substituiertes Phenyl,
- L² und L³: unabhängig voneinander jeweils Wasserstoff, gegebenenfalls durch Phenyl oder C₁-C₄-Alkylphenyl substituiertes C₁-C₁₀-Alkoxy, gegebenenfalls durch Phenyl substituiertes C₁-C₁₀-Alkylthio, Halogen, Hydroxyphenyl, C₁-C₄-Alkoxyphenyl oder einen Rest der Formel 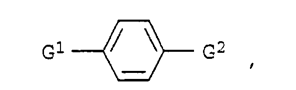 worin G¹ für Sauerstoff oder Schwefel und G² für Wasserstoff oder C₁-C₈-Monoalkylsulfamoyl, dessen Alkylkette durch 1 oder 2 Sauerstoffatome in Etherfunktion unterbrochen sein kann, stehen, und
- L⁴: Amino, Hydroxy oder gegebenenfalls durch Phenyl substituiertes C₁-C₁₀-Alkylthio bedeuten,
sowie ein Verfahren zum thermischen Transfer dieser Farbstoffe.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Es ist bekannt, das Thermotransferdruckverfahren mit einzelnen Farbstoffen oder auch mit Mischungen von Farbstoffen durchzuführen. Dabei hat sich jedoch gezeigt, daß die zur Anwendung kommenden Farbstoffe häufig noch anwendungstechnische Mängel aufweisen.

Aufgabe der vorliegenden Erfindung war es daher, neue Farbstoffmischungen im roten Farbbereich, insbesondere im Magentabereich, bereitzustellen, die sich in vorteilhafter Weise zur thermischen Übertragung eignen.

Demgemäß wurden die eingangs näher bezeichneten Farbstoffmischungen gefunden.

Alle in den obengenannten Formeln auftretenden Alkyl- und Alkenylgruppen können sowohl geradkettig als auch verzweigt sein.

Wenn in den obengenannten Formeln substituierte Alkylgruppen auftreten, so weisen sie in der Regel 1 oder 2 Substituenten auf.

Wenn in den obengenannten Formeln substituierte Phenyl-, Pyridyl- oder Thienylgruppen auftreten, so weisen sie in der Regel 1 bis 3, vorzugsweise 1 oder 2, Substituenten auf.

Es folgt eine beispielhafte Aufzählung von Resten. Dabei sind auch Reste erwähnt, die sich in der nachfolgenden Formel IV befinden.

Reste B¹, B², L¹, R¹, R², R⁴, R⁶, R⁷, W, Y¹, Y², Y⁴, Y⁵, Y⁶, Y⁷, Y⁸, Z², Z³, Z⁴ und Z⁵ sind z.B. Methyl oder Ethyl.

Reste R³ und Y³ sind, wie weiterhin auch die Reste B¹, B², L¹, R¹, R², R⁴, R⁶, R⁷, Y¹, Y², Y⁴, Y⁵, Y^{6,} Y^{7,} Y⁸, Z², Z³, Z⁴ und Z⁵ Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste B¹, B², L¹, R¹, R², R³, R⁶, R⁷, W, Y¹, Y², Y³, Y⁴, Y⁶, Y⁷ und Y⁸ sind weiterhin z.B. Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5^{th} Edition, Vol. A 1, Seiten 290 bis 293, sowie Vol. A 10, Seiten 284 und 285).

Reste R¹, R², R³, R⁶, R⁷, Y¹, Y², Y³, Y⁶ und Y⁷ sind weiterhin z.B. Cyclopentyl, Methylcyclopentyl, Dimethylcyclopentyl, Cyclohexyl, Methylcyclohexyl oder Cycloheptyl.

Reste R¹, R², R⁶, R⁷, W, Y¹, Y², Y⁴, Y⁶, Y⁷ und Y⁸ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2-oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxyundecyl, 3,6,9,12-Tetraoxatridecyl oder 3,6,9,12-Tetraoxatetradecyl.

Reste R¹, R², Y¹, Y², Y⁶ und Y⁷ sind weiterhin z.B. 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Butoxycarbonylpropyl, 2- oder 4-Methoxycarbonylbutyl, 2- oder 4-Ethoxycarbonylbutyl, 2- oder 4-Propoxycarbonylbutyl, 2- oder 4-Butoxycarbonylbutyl, 2-Methoxycarbonyloxyethyl, 2-Ethoxycarbonyloxyethyl, 2-Propoxycarbonyloxyethyl, 2-Isopropoxycarbonyloxyethyl, 2-Butoxycarbonyloxyethyl, 2- oder 3-Methoxycarbonyloxypropyl, 2- oder 3-Ethoxycarbonyloxypropyl, 2- oder 3-Propoxycarbonyloxypropyl, 2- oder 3-Butoxycarbonyloxypropyl, 2- oder 4-Methoxycarbonyloxybutyl, 2- oder 4-Ethoxycarbonyloxybutyl, 2- oder 4-Propoxycarbonyloxybutyl, 2-oder 4-Butoxycarbonyloxybutyl, Prop-1-en-3-yl, But-2-en-4-yl oder 2-Methylprop-1-en-3-yl.

Reste R⁶ und R⁷ sind weiterhin z.B. 2-Benzyloxyethyl, 2-(Pyrazol-1-yl)ethyl, 2- oder 3-Benzyloxypropyl, 2- oder 3-(Pyrazol-1-yl)propyl, 2- oder 4-Benzyloxybutyl, 2- oder 4-(Pyrazol-1-yl)butyl, 2-Phenoxyethyl, 2- oder 3-Phenoxypropyl, 2- oder 4-Phenoxybutyl, 2-Cyclohexyloxyethyl, 2- oder 3-Cyclohexyloxypropyl oder 2- oder 4-Cyclohexyloxybutyl.

Reste R¹ und R² sind weiterhin z.B. 2-Cyanoethyl, 2- oder 3-Cyanopropyl, 2- oder 4-Cyanobutyl, 2-Hydroxyethyl, 2- oder 3-Hydroxypropyl, 2- oder 4-Hydroxybutyl, 2-Chlorethyl, 2- oder 3-Chlorpropyl, 2- oder 4-Chlorbutyl, 2-Acetyloxyethyl, 2- oder 3-Acetyloxypropyl, 2- oder 4-Acetyloxybutyl, 2-Propionyloxyethyl, 2- oder 3-Propionyloxypropyl oder 2- oder 4-Propionyloxybutyl.

Reste R¹, R², R⁶, R⁷, Y¹, Y², Y⁶, Y⁷ und Z² sind weiterhin z.B. Benzyl oder 1- oder 2-Phenylethyl.

Reste B¹, B², L¹, R¹, R², R³, R⁴, R⁶, R⁷, Y¹, Y², Y³, Y⁶, Y⁷ und Z² sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3- oder 4-Chlorphenyl, 2-, 3- oder 4-Bromphenyl oder 2-, 3- oder 4-Nitrophenyl.

Reste R⁵ sind z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, Mono- oder Dipentylcarbamoyl, Mono- oder Dihexylcarbamoyl, Mono- oder Diheptylcarbamoyl, Mono- oder Dioctylcarbamoyl, Mono- oder Bis (2-ethylhexyl)carbamoyl oder N-Methyl-N-ethylcarbamoyl.

Reste L², L^{3,} L⁴ und Z² sind weiterhin z.B. Methylthio, Ethylthio, Propylthio, Isopropylthio, Butylthio, Isobutylthio, Pentylthio, Hexylthio, Heptylthio, Octylthio, Isooctylthio, 2-Ethylhexylthio, Nonylthio, Isononylthio, Decylthio, Isodecylthio, Benzylthio oder 1- oder 2-Phenylethylthio.

Reste L², L³, Y⁴, Y⁵, Z², Z³, Z⁴ und Z⁵ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L², L³ und Z² sind weiterhin z.B. Heptyloxy, Octyloxy, Isooctyloxy, 2-Ethylhexyloxy, Nonyloxy, Isononyloxy, Decyloxy oder Isodecyloxy.

Reste L², L³ und Z² sind weiterhin z.B. Benzyloxy oder 1- oder 2-Phenylethoxy.

Reste L² und L³ sind weiterhin z.B. 2-, 3-, oder 4-Hydroxyphenyl, 2-, 3- oder 4-Methoxyphenyl, 2-, 3- oder 4-Ethoxyphenyl, 2-, 3- oder 4-Propoxyphenyl, 2-, 3- oder 4-Isopropoxyphenyl oder 2-, 3- oder 4-Butoxyphenyl.

Reste Z² sind, wie weiterhin auch Reste L², L³, Z³, Z⁴ und Z⁵, z.B. Fluor, Chlor oder Brom.

Reste B¹, B², Z³, Z⁴ und Z⁵ sind weiterhin z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Heptylsulfonyl, Octylsulfonyl, 2-Ethylhexylsulfonyl, Phenylsulfonyl, 2-Methylphenylsulfonyl, 2-Methoxyphenylsulfonyl,oder 2-Chlorphenylsulfonyl.

Reste R⁵, Z³, Z⁴ und Z⁵ sind weiterhin z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, Hexyloxycarbonyl, Heptyloxycarbonyl, Octyloxycarbonyl, Isooctyloxycarbonyl oder 2-Ethylhexyloxycarbonyl.

Reste Z³, Z⁴ und Z⁵ sind weiterhin z.B. 2-Phenoxyethoxycarbonyl, 2- oder 3-Phenoxypropoxycarbonyl oder 2- oder 4-Phenoxybutoxycarbonyl.

Reste Z² sind weiterhin z.B. 2- oder 3-Methylthienyl oder 2-, 3- oder 4-Methylpyridyl.

Reste B¹, B² und Z¹ sind weiterhin z.B. Formyl, Acetyl, Propionyl, Butyryl, Pentanoyl oder Hexanoyl.

Reste B¹ und B² sind weiterhin Heptanoyl, Octanoyl, 2-Ethylhexanoyl, Isooctanoyl, Nonanoyl, Isononanoyl, Benzoyl, 2-, 3- oder 4-Methylbenzol oder 2-, 3- oder 4-Methoxybenzoyl.

Reste Y⁴ sind weiterhin z.B. Acetylamino, Propionylamino, Methoxyacetylamino, Benzoylamino, Methoxycarbonylamino, Ethoxycarbonylamino, Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste G² sind z.B. Methylsulfamoyl, Ethylsulfamoyl, Propylsulfamoyl, Isopropylsulfamoyl, Butylsulfamoyl, Pentylsulfamoyl, Hexylsulfamoyl, Heptylsulfamoyl, Octylsulfamoyl, 2-Ethylsulfamoyl, 2-Methoxyethylsulfamoyl, 2-Ethoxyethylsulfamoyl, 3,6-Dioxaheptylsulfamoyl, 3,6-Dioxaoctylsulfamoyl, 4,8-Dioxanonylsulfamoyl, 3,7-Dioxaoctylsulfamoyl, 3,7-Dioxanonylsulfamoyl, 4,7-Dioxaoctylsulfamoyl, 4,7-Dioxanonylsulfamoyl oder 4,8-Dioxadecylsulfamoyl.

Wenn die Reste R¹ und R², Y¹ und Y² oder Y⁶ und Y⁷ jeweils zusammen mit dem sie verbindenden Stickstoffatom einen 5- oder 6-gliedrigen gesättigten heterocyclischen Rest, der gegebenenfalls weitere Heteroatome enthält, bedeuten, so können dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht kommen.

Wenn die Reste R¹ und R² in Formel I jeweils C₁-C₁₀-Alkyl bedeuten oder wenn einer der Reste R¹ und R² C₁-C₁₀-Alkyl und der andere C₅-C₇-Cycloalkyl bedeutet, so sind solche Pyridonfarbstoffe in den Farbstoffmischungen bevorzugt, in der die Summe der in den beiden Resten R¹ und R² vorhandenen Kohlenstoffatome mindestens 7, vorzugsweise mindestens 8, beträgt.

Wenn der Rest M in Formel I für einen Rest der Formel IIb oder IIc steht, so sind solche Pyridonfarbstoffe in den Farbstoffmischungen bevorzugt, in denen E Stickstoff und A einen Rest der Formel C-R⁷ bedeutet, wobei R⁷ die obengenannte Bedeutung besitzt.

Weiterhin bevorzugt sind Farbstoffmischungen, die einen oder mehrere Pyridonfarbstoffe der Formel I enthalten, in der M für einen Rest der Formel IIa oder IIc steht.

Weiterhin bevorzugt sind Farbstoffmischungen, die einen oder mehrere Pyridonfarbstoffe der Formel I enthalten, in der R⁴ Methyl bedeutet.

Weiterhin bevorzugt sind Farbstoffmischungen, die einen oder mehrere Pyridonfarbstoffe der Formel I enthalten, in der R⁵ Cyano bedeutet.

Weiterhin bevorzugt sind Farbstoffmischungen, die einen oder mehrere Pyridonfarbstoffe der Formel I enthalten, in der R³ C₃-C₁₀-Alkyl, vorzugsweise verzweigtes C₃-C₁₀-Alkyl, insbesondere C₃-C₈-Alkyl, Phenyl oder Thienyl bedeutet.

Weiterhin bevorzugt sind Farbstoffmischungen, die einen oder mehrere Pyridonfarbstoffe der Formel I enthalten, in der R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

Weiterhin bevorzugt sind Farbstoffmischungen, die einen oder mehrere Pyridonfarbstoffe der Formel I enthalten, in der R⁷ C₁-C₁₀-Alkyl oder gegebenenfalls durch C₁-C₄-Alkyl oder C₁-C₄-Alkoxy substituiertes Phenyl bedeutet.

Weiterhin bevorzugt sind Farbstoffmischungen, die einen oder mehrere Pyridonfarbstoffe der Formel I enthalten, in der R¹ und R² unabhängig voneinander jeweils C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl bedeuten.

Besonders bevorzugt sind Farbstoffmischungen, die einen oder mehrere Pyridonfarbstoffe der Formel I enthalten, in der R³ verzweigtes C₃-C₆-Alkyl, insbesondere Isopropyl, Isobutyl oder tert-Butyl, bedeutet. Tert-Butyl ist besonders zu nennen.

Weiterhin besonders bevorzugt sind Farbstoffmischungen, die einen oder mehrere Pyridonfarbstoffe der Formel I enthalten, in der R⁶ C₄-C₈-Alkyl oder Cyclohexyl bedeutet.

Weiterhin besonders bevorzugt sind sind Farbstoffmischungen, die einen oder mehrere Pyridonfarbstoffe der Formel I enthalten, in der R⁷ C₁-C₁₀-Alkyl bedeutet.

Weiterhin besonders bevorzugt sind Farbstoffmischungen, die einen oder mehrere Pyridonfarbstoffe der Formel I enthalten, in der R¹ und R² unabhängig voneinander jeweils C₁-C₈-Alkyl, C₁-C₄-Alkoxy-C₂-C₄-alkyl, C₁-C₄-Alkoxycarbonyl-C₂-C₄-alkyl, Benzyl oder Prop-1-en-3-yl bedeuten oder in der einer der beiden Reste R¹ und R² C₁-C₄-Alkyl und der andere Cyclohexyl bedeutet.

Ganz besonders bevorzugt sind Farbstoffmischungen, die einen oder mehrere Pyridonfarbstoffe der Formel I enthalten, in der R¹ und R² unabhängig voneinander jeweils C₁-C₈-Alkyl, Benzyl oder Prop-1-en-3-yl bedeutet.

Weiterhin bevorzugt sind Farbstoffmischungen, die einen oder mehrere Anthrachinonfarbstoffe der Formel III enthalten, in der L¹ Wasserstoff und L⁴ Hydroxy bedeuten und L² und L³ jeweils die obengenannte Bedeutung besitzen.

Weiterhin bevorzugt sind Farbstoffmischungen, die einen oder mehrere Anthrachinonfarbstoffe der Formel III enthalten, in der L² und/oder L³ einen Rest der Formel 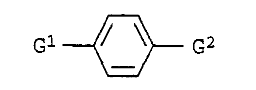 bedeuten, worin G¹ und G² jeweils die obengenannte Bedeutung besitzen.

Weiterhin besonders bevorzugt sind Farbstoffmischungen, die einen oder mehrere Anthrachinonfarbstoffe der Formel IIIa 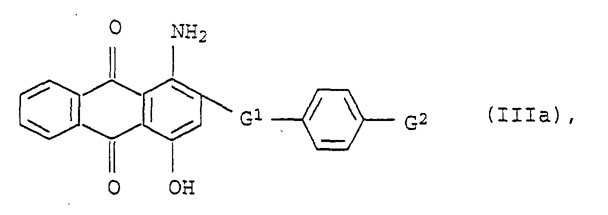 enthalten, in der G¹ und G² jeweils die obengenannte Bedeutung be sitzen.

Weiterhin bevorzugt sind Farbstoffmischungen, die neben den Pyridonfarbstoffen der Formel I und den Anthrachinonfarbstoffen der Formel III zusätzlich noch einen oder mehrere Azofarbstoffe enthalten, deren Diazokomponente aus der Reihe der Aminoisothiazole oder Aniline und deren Kupplungskomponente aus der Reihe der Aminothiazole, Aniline oder Tetrahydrochinoline stammen.

Besonders zu nennen sind dabei Azofarbstoffe der Formel IV

D ― N = N ― K (IV),

in der
- D: für einen Rest der Formel 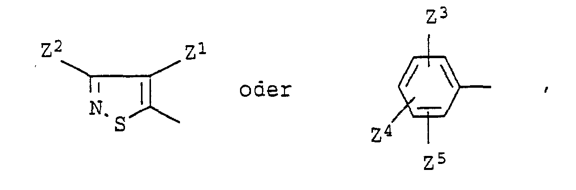
worin
- Z¹: Wasserstoff, Cyano, C₁-C₈-Alkoxycarbonyl, C₁-C₆-Alkanoyl, Thiocyanato, Halogen oder Nitro,
- Z²: Cyano, gegebenenfalls durch Phenyl substituiertes C₁-C₆-Alkyl, gegebenenfalls durch Phenyl substituiertes C₁-C₁₀-Alkoxy, gegebenenfalls durch Phenyl substituiertes C₁-C₁₀-Alkylthio, gegebenenfalls durch C₁-C₄-Alkyl, C₁-C₄-Alkoxy, Halogen oder Nitro substituiertes Phenyl, Thienyl, C₁-C₄-Alkylthienyl, Pyridyl oder C₁-C₄-Alkylpyridyl und
- Z³, Z⁴ und Z⁵: unabhängig voneinander jeweils Wasserstoff, C₁-C₆-Alkyl, C₁-C₆-Alkoxy, Halogen, Nitro, Cyano, gegebenenfalls durch Phenoxy substituiertes C₁-C₈-Alkoxycarbonyl, C₁-C₈-Alkylsulfonyl oder gegebenenfalls durch C₁-C₄-Alkyl, C₁-C₄-Alkoxy, Halogen oder Nitro substituiertes Phenylsulfonyl oder Z³ und Z⁴ zusammen einen Rest der Formel CO-NW-CO, worin W die Bedeutung von C₁-C₁₀-Alkyl, besitzt, das durch 1 oder 2 Sauerstoffatome in Etherfunktion unterbrochen sein kann und gegebenenfalls durch Hydroxy substituiert ist, bedeuten und
- K: für einen Rest der Formel 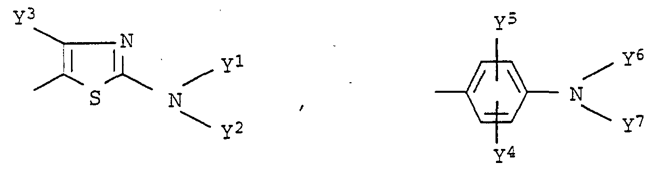 oder 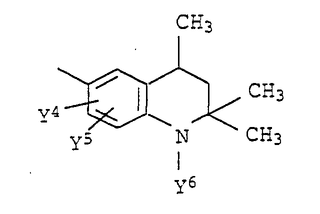 stehen,
worin
- Y¹ und Y²: unabhängig voneinander jeweils C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder Y¹ und Y² zusammen mit dem sie verbindenden Stickstoffatom einen 5- oder 6-gliedrigen gesättigten heterocyclischen Rest, der weitere Heteroatome aufweisen kann,
- Y³: C₃-C₁₀-Alkyl, C₅-C₇-Cycloalkyl, gegebenenfalls durch C₁-C₄-Alkyl, C₁-C₄-Alkoxy, Halogen oder Nitro substituiertes Phenyl oder Thienyl,
- Y⁴: Wasserstoff, C₁-C₁₀-Alkyl, das gegebenenfalls durch 1 bis 4 Sauerstoffatome in Etherfunktion unterbrochen ist, Hydroxy, C₁-C₆-Alkoxy, insbesondere Methoxy oder Ethoxy, C₁-C₄-Alkylsulfonylamino, C₁-C₈-Mono- oder Dialkylaminosulfonylamino oder den Rest -NHCOY⁸ oder -NHCO₂Y⁸, wobei Y⁸ die Bedeutung von Phenyl, Benzyl, Tolyl oder C₁-C₁₀-Alkyl, das gegebenenfalls durch 1 bis 4 Sauerstoffatome in Etherfunktion unterbrochen ist, besitzt,
- Y⁵: Wasserstoff, C₁-C₆-Alkyl oder C₁-C₆-Alkoxy und
- Y⁶ und Y⁷: unabhängig voneinander jeweils Wasserstoff, C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder Y⁶ und Y⁷ zusammen mit dem sie verbindenden Stickstoffatom einen 5- oder 6-gliedrigen gesättigten heterocyclischen Rest, der weitere Heteroatome aufweisen kann, bedeuten.

Von besonderem Interesse sind dabei Azofarbstoffe der Formel IV, in der
- Z¹: Cyano oder Nitro,
- Z²: gegebenenfalls durch Phenyl substituiertes C₁-C₆-Alkyl, gegebenenfalls durch Phenyl substituiertes C₁-C₆-Alkylthio oder gegebenenfalls durch C₁-C₄-Alkyl, C₁-C₄-Alkoxy, Halogen oder Nitro substituiertes Phenyl oder Thienyl,
- Z³, Z⁴ und Z⁵: unabhängig voneinander jeweils Wasserstoff, C₁-C₆-Alkyl, C₁-C₆-Alkoxy, Nitro, Cyano oder gegebenenfalls durch Phenoxy substituiertes C₁-C₆-Alkoxycarbonyl oder Z³ und Z⁴ zusammen einen Rest der Formel CO-NW-CO, worin W die obengenannte Bedeutung besitzt,
- Y¹, Y², Y⁶ und Y⁷: unabhängig voneinander jeweils C₁-C₆-Alkyl, das gegebenenfalls durch Hydroxy, C₁-C₄-Alkanoyloxy, C₁-C₄-Alkoxycarbonyl, C₁-C₄-Alkoxycarbonyloxy oder Phenyl substituiert ist und durch 1 oder 2 Sauerstoffatome in Etherfunktion unterbrochen sein kann,
- Y³: verzweigtes C₃-C₁₀-Alkyl und
- Y⁴: Wasserstoff, C₁-C₄-Alkyl, Methoxy, Ethoxy oder C₁-C₆-Alkanoylamino bedeuten.

Daneben werden Farbstoffmischungen bevorzugt, in denen die Substituenten in den Formeln der einzelnen Mischungspartner aus einer Kombination der oben aufgeführten bevorzugten Substituenten ausgewählt sind.

Die erfindungsgemäßen Farbstoffmischungen enthalten in der Regel 5 bis 95 Gew.-%, vorzugsweise 20 bis 80 Gew.-% und insbesondere 40 bis 60 Gew.-%, jeweils bezogen auf das Gewicht der Farbstoffmischung, eines oder mehrerer Pyridonfarbstoffe der Formel I sowie 5 bis 95 Gew.-%, vorzugsweise 20 bis 80 Gew.-% und insbesondere 40 bis 60 Gew.-%, jeweils bezogen auf das Gewicht der Farbstoffmischung, eines oder mehrerer Anthrachinonfarbstoffe der Formel III.

Wenn die Farbstoffmischungen zusätzlich noch Azofarbstoffe enthalten, so weisen sie in der Regel 5 bis 45 Gew.-%, vorzugsweise 40 bis 60 Gew.-%, jeweils bezogen auf das Gewicht an Pyridon- und Anthrachinonfarbstoffe, an Azofarbstoffen auf.

Die neuen Farbstoffmischungen können nach an sich bekannten Methoden, z.B. durch Abmischen der Einzelfarbstoffe im obengenannten Gewichtsverhältnis erhalten werden.

Die Pyridonfarbstoffe der Formel I sind an sich bekannt und beispielsweise in der US-A-5 079 365, WO-A-95/17 470, WO-A-95/22 581 oder in der älteren europäischen Patentanmeldung Nr. 96 101 637.5 beschrieben oder können nach den dort genannten Methoden erhalten werden. Die thermische Übertragung solcher Farbstoffe ist z.B. in der älteren Patentanmeldung EP-A-680 834 beschrieben.

Die Anthrachinonfarbstoffe der Formel III sind ebenfalls an sich bekannt und beispielsweise in K. Venkataraman "The Chemistry of Synthetic Dyes", Vol. III, Seiten 391 bis 413, Academic Press, New York, London, 1970, beschrieben.

Die Azofarbstoffe der Formel IV sind ebenfalls an sich bekannt und z.B. in der älteren Patentanmeldung WO-A-96/03462 beschrieben. Diejenigen Azofarbstoffe, die über eine Kupplungskomponente aus der Anilinreihe verfügen, können ebenfalls nach den dort genannten Methoden oder auch, wie in der US-A-5 283 326 beschrieben, erhalten werden.

Die erfindungsgemäßen Farbstoffmischungen zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und gewährleisten eine flexible coloristische Anpassung an die restlichen subtraktiven Grundfarben, wodurch hochwertige Farbenräume resultieren. Außerdem erlauben die erfindungsgemäßen Farbstoffmischungen die Herstellung von guten Schwarzmischungen.

Insbesondere hervorzuheben ist die spektral gleichmäßige Abnahme der Einzelkomponenten bei Bestrahlung, d.h. der Einzelfarbstoff mit der geringeren Lichtechtheit nimmt in der Regel nicht bevorzugt ab.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich eine eingangs näher bezeichnete Farbstoffmischung befindet.

Zur Herstellung der für das erfindungsgemäße Verfahren benötigten Farbstoffträger werden die Farbstoffmischungen in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekulardispers gelöster Form. Die Druckfarbe kann mittels einer Rakel auf den inerten Träger aufgetragen und die Färbung an der Luft getrocknet werden. Geeignete organische Lösungsmittel für die Farbstoffmischungen sind z.B. solche, in denen die Löslichkeit der Farbstoffmischungen bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne daß dabei eine sichtbare Auskristallisation der Farbstoffmischung auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel: Farbstoffmischung beträgt im allgemeinen 1:1 bis 10:1.

Als Hilfsmittel kommen z.B. Trennmittel in Betracht, wie sie in der US-A-5 132 438 oder den entsprechend dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoffträgers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffmischungen eignen sich weiterhin vorteilhaft zum Färben oder Bedrucken von synthetischen Materialien (auch mittels des Ink-Jet-Verfahrens), z.B. von Polyestern, Polyamiden oder Polycarbonaten. Insbesondere zu nennen sind textile Materialien, wie Fasern, Garne, Zwirne, Maschenware, Webware oder Non-wovens aus Polyester, modifiziertem Polyester, z.B. anionisch modifiziertem Polyester, oder Mischgewebe von Polyester mit Cellulose, Baumwolle, Viskose oder Wolle. Die Färbe- und Druckbedingungen sind an sich bekannt und schließen auch das Färben in überkritischem Kohlendioxid mit ein. Die erfindungsgemäßen Farbstoffe können auch zum Färben von keratinischen Fasern, z.B. bei der Haarfärbung oder der Färbung von Pelzen, verwendet werden

Die neuen Farbstoffmischungen eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

In den folgenden Tabellen 1 bis 4 sind die Einzelfarbstoffe aufgeführt, die als Mischungspartner dienten.

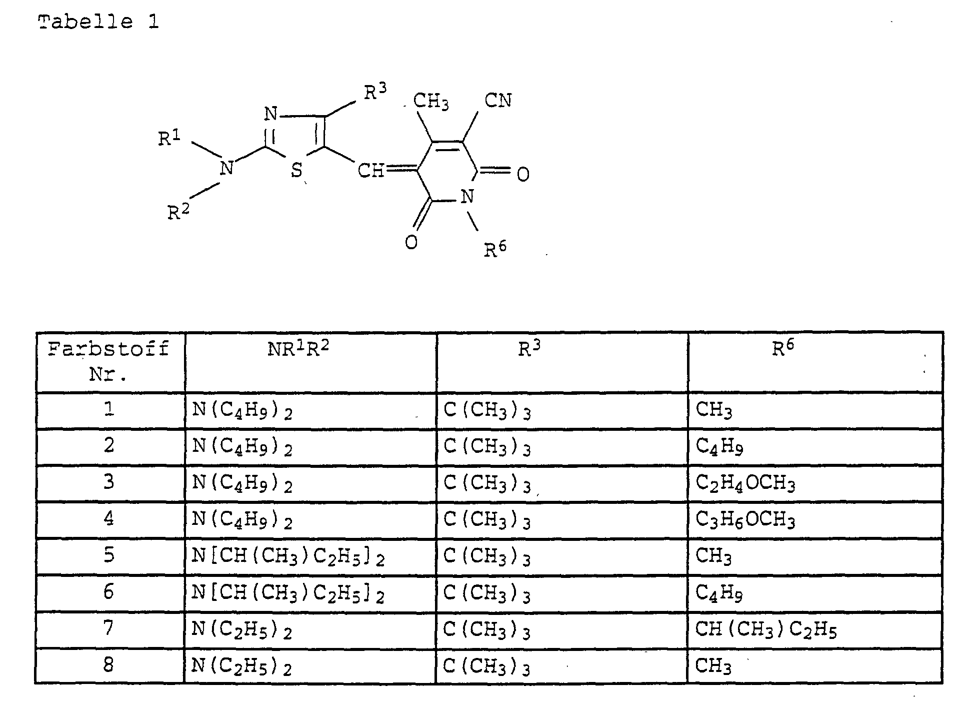

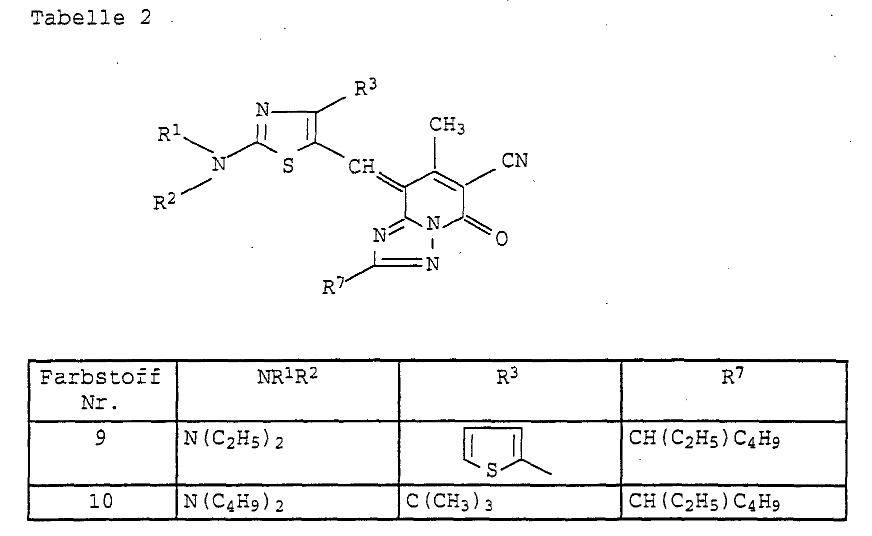

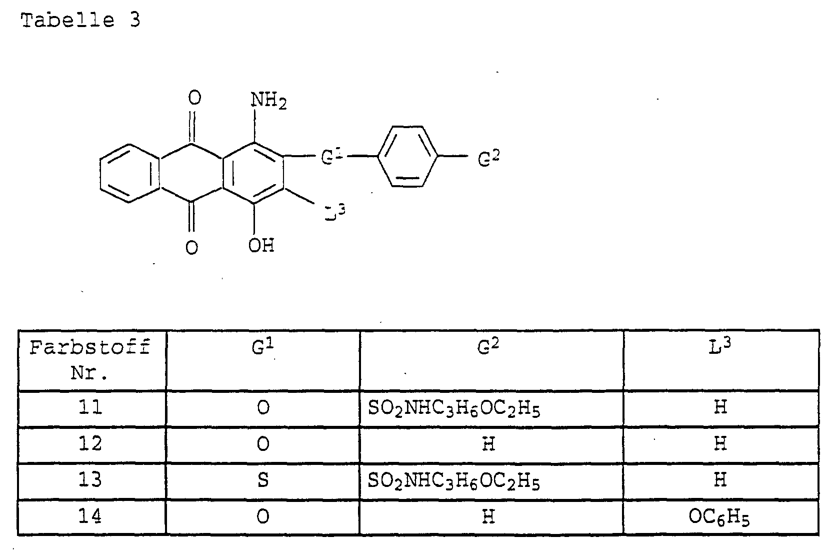

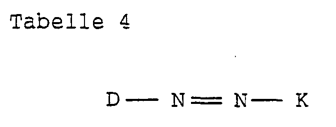

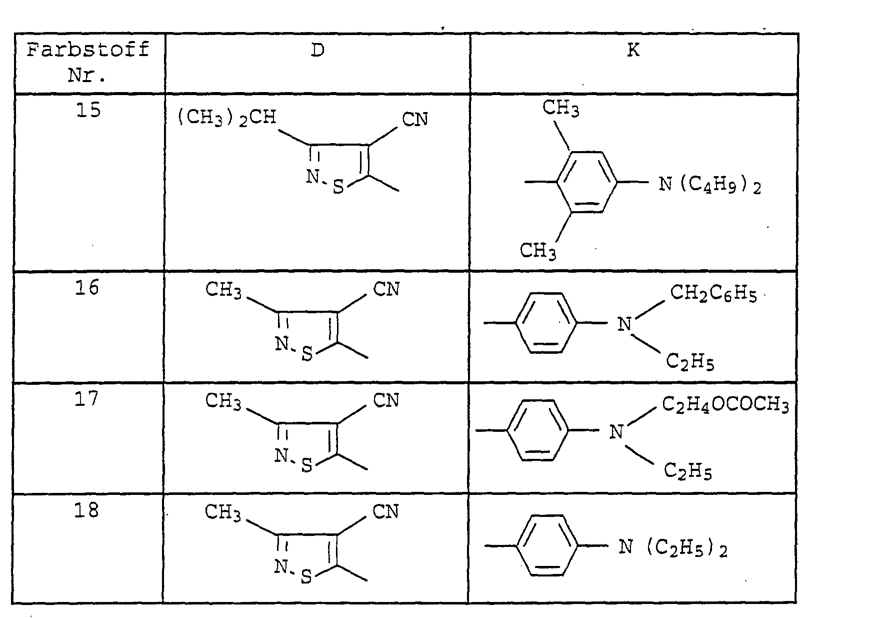

Vorschrift für die thermische Übertragung:
a) 10 g Farbstoffmischung werden, gegebenenfalls unter kurzzeitigem Erwärmen auf 80 bis 90°C, in 100 g einer 10 gew.-%igen Lösung eines Bindemittels auf Basis von Polyvinylbutyral in einem Methylethylketon/Toluol/Cyclohexanon-Gemisch (4,5:2:2 v/v/v) eingerührt.
   Das Gemisch wird mit einer 10 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsübliches Videoprintpapier (Color Videoprint Paper der Firma Hitachi) verdruckt.
   Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,5 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind zusammen mit dem λₘₐₓ-Werten (gemessen auf dem Videoprintpapier) in der folgenden Tabelle 5 aufgeführt.

**Tabelle 5**

| Mischung der Farbstoffe | Gewichtsverhältnis | λₘₐₓ [nm] | Q* [mJ/Dot] | m* [1/mJ] |
|---|---|---|---|---|
| 1/11 | 3:1 | 536 | 0,80 | 3,04 |
| 1/11 | 2:1 | 536 | 0,81 | 2,96 |
| 1/11 | 1:1 | 536 | 0,87 | 2,53 |
| 1/11/13 | 1:1:1 | 537 | 0,98 | 2,18 |
| 2/11 | 3:1 | 537 | 0,91 | 2,46 |
| 2/11 | 2:1 | 537 | 0,86 | 2,91 |
| 2/11 | 1:1 | 537 | 0,89 | 2,58 |
| 2/12 | 1:1 | 537 | 0,82 | 3,41 |
| 2/13 | 1:1 | 536 | 0,95 | 2,86 |
| 3/11/13 | 1:1:1 | 537 | 0,99 | 2,24 |
| 4/12 | 1:1 | 537 | 0,81 | 3,36 |
| 4/11/13 | 1:1:1 | 537 | 1,06 | 1,91 |
| 5/11/13 | 1:1:1 | 537 | 1,07 | 2,01 |
| 6/11/13 | 1:1:1 | 538 | 1,06 | 1,78 |
| 7/11/13 | 1:1:1 | 534 | 1,04 | 1,75 |
| 8/12 | 1:1 | 537 | 0,84 | 3,31 |
| 8/13 | 1:1 | 536 | 0,91 | 2,62 |
| 9/11/13 | 1,5:1:1,5 | 569 | 1,32 | 1,39 |
| 10/12/14 | 1:1:1 | | 0,92 | 2,56 |

Gute Ergebnisse werden auch mit den in der folgenden Tabelle 6 aufgeführten Farbstoffmischungen erhalten.

**Tabelle 6**

| Mischung der Farbstoffe | Gewichtsverhältnis | Q* [mJ/Dot] | m* [1/mJ] |
|---|---|---|---|
| 1/12/14 | 1:1:1 | 1,10 | [1/mJ] |
| 2/14/16 | 1:1:1 | 0,87 | 2,60 |
| 2/14/17 | 1:1:1 | 0,88 | 2,81 |
| 6/12/18 | 1:1:1 | 0,86 | 2,76 |
| 10/12/17 | 1:1:0,5 | 0,90 | 2,99 |

## Patentansprüche

1. Farbstoffmischungen, enthaltend einen oder mehrere Pyridonfarbstoffe der Formel I 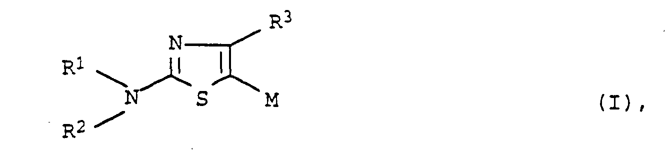 in der
M für einen Rest der Formel 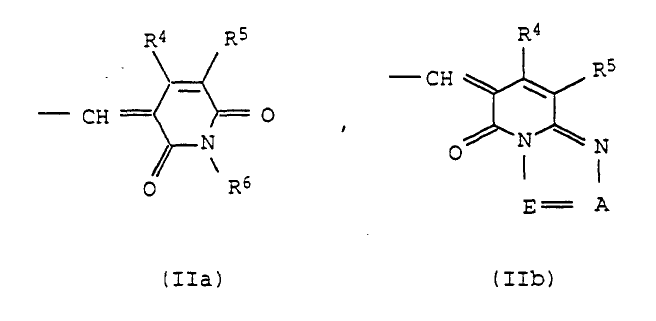 oder 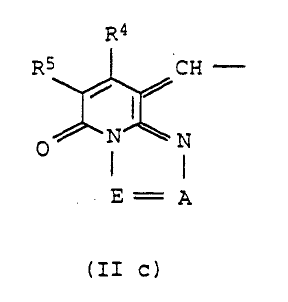 steht,
R¹ und R² unabhängig voneinander jeweils C₁-C₁₀-Alkyl, das gegebenenfalls durch C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder R¹ und R² zusammen mit dem die verbindenden Stickstoffatom einen 5- oder 6-gliedrigen gesättigten heterocyclischen Rest, der weitere Heteroatome aufweisen kann,
R^{3,} wenn M ein Rest der Formel IIa ist, tert-Butyl oder tert-Pentyl, oder wenn M ein Rest der Formel IIb oder IIc ist, C₃-C₁₀-Alkyl, C₅-C₇-Cycloalkyl, gegebenenfalls durch C₁-C₄-Alkyl, C₁-C₄-Alkoxy, Halogen oder Nitro substituiertes Phenyl oder Thienyl,
R⁴ Wasserstoff, C₁-C₆-Alkyl oder gegebenenfalls durch C₁-C₄-Alkyl, C₁-C₄-Alkoxy, Halogen oder Nitro substituiertes Phenyl,
R⁵ Cyano, Carbamoyl, C₁-C₈-Mono- oder Dialkylcarbamoyl, Carboxyl, C₁-C₈-Alkoxycarbonyl oder Benzimidazolyl,
R⁶ C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl, gegebenenfalls durch C₁-C₄-Alkyl, C₁-C₄-Alkoxy, Halogen oder Nitro substituiertes Phenyl, oder einen Rest der Formel NB¹B², worin B¹ und B² unabhängig voneinander jeweils für Wasserstoff, C₁-C₁₀-Alkyl, gegebenenfalls durch C₁-C₄-Alkyl, C₁-C₄-Alkoxy, Halogen oder Nitro substituiertes Phenyl, C₁-C₉-Alkanoyl, C₁-C₈-Alkylsulfonyl, gegebenenfalls durch C₁-C₄-Alkyl, C₁-C₄-Alkoxy, Halogen oder Nitro substituiertes Phenylsulfonyl, Pyridylsulfonyl, gegebenenfalls durch C₁-C₄-Alkyl, C₁-C₄-Alkoxy, Halogen oder Nitro substituiertes Benzoyl, Pyridylcarbonyl oder Thienylcarbonyl stehen, und
einer der beiden Reste A oder E Stickstoff und der andere einen Rest der Formel C-R⁷, worin R⁷ für C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy, Halogen oder Nitro substituiertes Phenyl steht, bedeuten,
sowie einen oder mehrere Anthrachinonfarbstoffe der Formel III 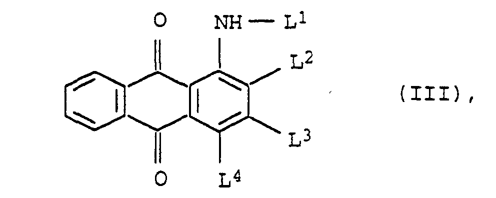 in der
L¹ Wasserstoff, C₁-C₁₀-Alkyl oder gegebenenfalls durch C₁-C₄-Alkyl, C₁-C₄-Alkoxy, Halogen oder Nitro substituiertes Phenyl,
L² und L³ unabhängig voneinander jeweils Wasserstoff, gegebenenfalls durch Phenyl oder C₁-C₄-Alkylphenyl substituiertes C₁-C₁₀-Alkoxy, gegebenenfalls durch Phenyl substituiertes C₁-C₁₀-Alkylthio, Halogen, Hydroxyphenyl, C₁-C₄-Alkoxyphenyl oder einen Rest der Formel 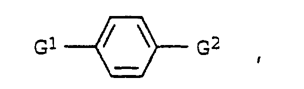 worin G¹ für Sauerstoff oder Schwefel und G² für Wasserstoff oder C₁-C₈-Monoalkylsulfamoyl, dessen Alkylkette durch 1 oder 2 Sauerstoffatome in Etherfunktion unterbrochen sein kann, stehen, und
L⁴ Amino, Hydroxy oder gegebenenfalls durch Phenyl substituiertes C₁-C₁₀-Alkylthio bedeuten.

2. Farbstoffmischungen nach Anspruch 1, **dadurch gekennzeichnet, daß** R⁴ Methyl bedeutet.

3. Farbstoffmischungen nach Anspruch 1, **dadurch gekennzeichnet, daß** R³ C₃-C₁₀-Alkyl, Phenyl oder Thienyl bedeutet.

4. Farbstoffmischungen nach Anspruch 1, **dadurch gekennzeichnet, daß** R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

5. Farbstoffmischungen nach Anspruch 1, **dadurch gekennzeichnet, daß** R⁷ C₁-C₁₀-Alkyl oder gegebenenfalls durch C₁-C₄-Alkyl oder C₁-C₄-Alkoxy substituiertes Phenyl bedeutet.

6. Farbstoffmischungen nach Anspruch 1, **dadurch gekennzeichnet, daß** L¹ Wasserstoff und L⁴ Hydroxy bedeuten und L² und L³ jeweils die in Anspruch 1 genannte Bedeutung besitzen.

7. Farbstoffmischungen nach Anspruch 1, enthaltend zusätzlich einen oder mehrere Azofarbstoffe, deren Diazokomponente aus der Reihe der Aminoisothiazole oder Aniline und deren Kupplungskomponente aus der Reihe der Aminothiazole, Aniline oder Tetrahydrochinoline stammen.

8. Verfahren zur Übertragung von Farbstoffen von einem Träger auf ein mit Kunststoff beschichtetes Papier durch Diffusion oder Sublimation mit Hilfe einer Energiequelle, **dadurch gekennzeichnet, daß** man einen Träger verwendet, auf dem sich eine Farbstoffmischung gemäß Anspruch 1 befindet.

## Claims

1. Dye mixtures comprising one or more pyridone dyes of the formula I 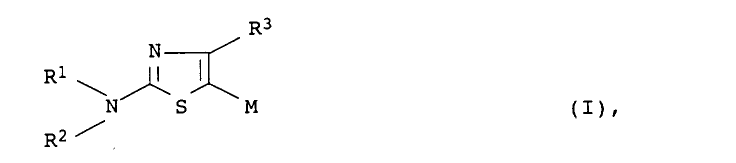 where
M is a radical of the formula 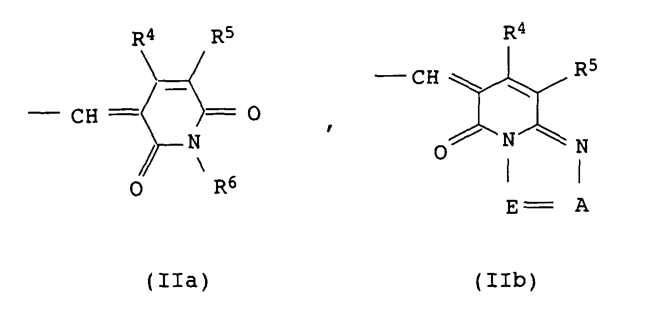 or 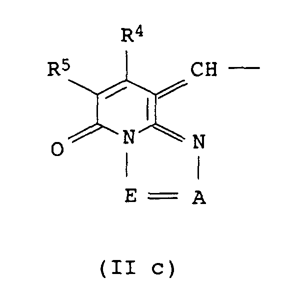
R¹ and R² are singly C₁-C₁₀₋alkyl with or without substitution by C₁-C₄-alkoxycarbonyl, C₁-C₄-alkoxycarbonyloxy, whose alkyl chain may in each case be interrupted by an oxygen atom in ether function, or phenyl and with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy-, halogen- or nitro-substituted phenyl, or together with the nitrogen atom joining them together a 5- or 6-membered saturated heterocyclic radical with or without further heteroatoms,
R³ is tert-butyl or tert-pentyl when M is a radical of the formula IIa or C₃-C₁₀-alkyl, C₅-C₇-cycloalkyl, unsubstituted or C₁-C₄-alkyl-, C₁-C₄-alkoxy-, halogen- or nitro-substituted phenyl or thienyl when M is a radical of the formula IIb or IIc,
R⁴ is hydrogen, C₁-C₆-alkyl or unsubstituted or C₁-C₄-alkyl-, C₁-C₄-alkoxy-, halogen- or nitro-substituted phenyl,
R⁵ is cyano, carbamoyl, mono- or di(C₁-C₈-alkyl)carbamoyl, carboxyl, C₁-C₈-alkoxycarbonyl or benzimidazolyl,
R⁶ is C₁-C₁₀-alkyl with or without substitution by phenyl, phenoxy, cyclohexyloxy or pyrazolyl and with or without interruption by from 1 to 4 oxygen atoms in ether function, C₅-C₇-cycloalkyl, unsubstituted or C₁-C₄-alkyl-, C₁-C₄-alkoxy-, halogen- or nitro-substituted phenyl or a radical of the formula NB¹B² where B¹ and B² are independently of each other hydrogen, C₁-C₁₀-alkyl, unsubstituted or C₁-C₄-alkyl-, C₁-C₄-alkoxy-, halogen- or nitro-substituted phenyl, C₁-C₉-alkanoyl, C₁-C₈-alkylsulfonyl, unsubstituted or C₁-C₄-alkyl-, C₁-C₄-alkoxy-, halogen- or nitro-substituted phenylsulfonyl, pyridylsulfonyl, unsubstituted or C₁-C₄-alkyl-, C₁-C₄-alkoxy-, halogen- or nitro-substituted benzoyl, pyridylcarbonyl or thienylcarbonyl, and
one of the two radicals A or E is nitrogen and the other is a radical of the formula C-R⁷ where R⁷ is C₁-C₁₀-alkyl with or without substitution by phenyl, phenoxy, cyclohexyloxy or pyrazolyl and with or without interruption by from 1 to 4 oxygen atoms in ether function, C₅-C₇-cycloalkyl or unsubstituted or C₁-C₄-alkyl-, C₁-C₄-alkoxy-, halogen- or nitro-substituted phenyl,
and one or more anthraquinone dyes of the formula III 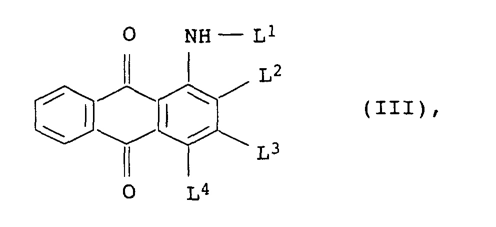 where
L¹ is hydrogen, C₁-C₁₀-alkyl or unsubstituted or C₁-C₄-alkyl-, C₁-C₄-alkoxy-, halogen- or nitro-substituted phenyl,
L² and L³ are independently of each other hydrogen, unsubstituted or phenyl- or C₁-C₄-alkylphenyl-substituted C₁-C₁₀-alkoxy, unsubstituted or phenyl-substituted C₁-C₁₀-alkylthio, halogen, hydroxyphenyl, C₁-C₄-alkoxyphenyl or a radical of the formula 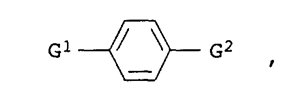 where G¹ is oxygen or sulfur and G² is hydrogen or C₁-C₈-monoalkylsulfamoyl whose alkyl chain may be interrupted by 1 or 2 oxygen atoms in ether function, and
L⁴ is amino, hydroxyl or unsubstituted or phenyl-substituted C₁-C₁₀-alkylthio.

2. Dye mixtures as claimed in claim 1, wherein R⁴ is methyl.

3. Dye mixtures as claimed in claim 1, wherein R³ is C₃-C₁₀-alkyl, phenyl or thienyl.

4. Dye mixtures as claimed in claim 1, wherein R⁶ is C₁-C₈-alkyl, cyclopentyl, cyclohexyl or unsubstituted or C₁-C₄-alkyl- or C₁-C₄-alkoxy-substituted phenyl.

5. Dye mixtures as claimed in claim 1, wherein R⁷ is C₁-C₁₀-alkyl or unsubstituted or C₁-C₄-alkyl- or C₁-C₄-alkoxy-substituted phenyl.

6. Dye mixtures as claimed in claim 1, wherein L¹ is hydrogen, L⁴ is hydroxyl and L² and L³ are each as defined in claim 1.

7. Dye mixtures as claimed in claim 1, further comprising one or more azo dyes whose diazo component is selected from the group consisting of the aminoisothiazoles and anilines and whose coupling component is selected from the group consisting of the aminothiazoles, anilines and tetrahydroquinolines.

8. A method of transferring dyes from a transfer to a plastic-coated paper by diffusion or sublimation with the aid of an energy source, which comprises using a transfer comprising a dye mixture as claimed in claim 1.

## Revendications

1. Mélanges de colorants, contenant un ou plusieurs colorants pyridone de formule I 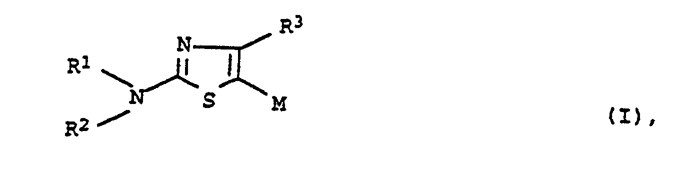 dans laquelle
M représente un résidu de formule 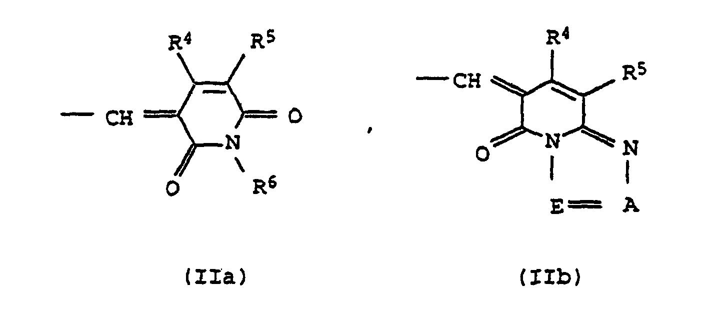 ou 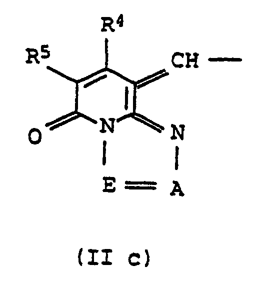
R¹ et R² représentent chacun, indépendamment l'un de l'autre, un groupe alkyle en C₁ à C₁₀, qui est éventuellement substitué par un groupe (alcoxy en C₁ à C₄)-carbonyle, (alcoxy en C₁ à C₄)-carbonyloxy, dont la chaîne alkyle peut être interrompue respectivement par un atome d'oxygène dans une fonction éther, ou un groupe phényle, et peut être interrompu par 1 à 4 atomes d'oxygène dans une fonction éther, un groupe cycloalkyle en C₅ à C₇, alcényle en C₃ à C₄, un groupe phényle éventuellement substitué par un groupe alkyle en C₁ à C₄, alcoxy en C₁ à C₄, halogéno ou nitro, ou bien R¹ et R² forment conjointement avec l'atome d'azote qui les lie, un résidu hétérocyclique saturé à 5 ou 6 maillons qui peut comprendre d'autres hétéroatomes,
R³ représente, lorsque M est un résidu de formule Iia, un groupe tert-butyle ou tert-pentyle, ou lorsque M est un résidu de formule IIb ou IIc, un groupe alkyle en C₃ à C₁₀, cycloalkyle en C₅ à C₇, un groupe thiényle ou phényle éventuellement substitué par un groupe alkyle en C₁ à C₄, alcoxy en C₁ à C₄, halogéno ou nitro,
R⁴ représente un atome d'hydrogène, un groupe alkyle en C₁ à C₆, ou un groupe phényle éventuellement substitué par un groupe alkyle en C₁ à C₄, alcoxy en C₁ à C₄, halogéno ou nitro,
R⁵ représente un groupe cyano, carbamoyle, mono- ou di-(alkyle en C₁ à C₈)-carbamoyle, carboxyle, (alcoxy en C₁ à C₈)-carbonyle ou benzimidazolyle,
R⁶ représente un groupe alkyle en C₁ à C₁₀, qui est éventuellement substitué par un groupe phényle, phénoxy, cyclohexyloxy ou pyrazolyle et qui peut être interrompu par 1 à 4 atomes d'oxygène dans une fonction éther, cycloalkyle en C₅ à C₇, un groupe phényle éventuellement substitué par un groupe alkyle en C₁ à C₄, alcoxy en C₁ à C₄, halogéno ou nitro, ou un résidu de formule NB¹B² dans laquelle B¹ et B² représentent chacun indépendamment l'un de l'autre, un atome d'hydrogène, un groupe alkyle en C₁ à C₁₀, un groupe phényle éventuellement substitué par un groupe alkyle en C₁ à C₄, alcoxy en C₁ à C₄, halogéno ou nitro, un groupe alcanoyle en C₁ à C₉, alkylsulfonyle en C₁ à C₈, un groupe phénylsulfonyle éventuellement substitué par un groupe alkyle en C₁ à C₄, alcoxy en C₁ à C₄, halogéno ou nitro, un groupe pyridylsulfonyle, un groupe benzoyle éventuellement substitué par un groupe alkyle en C₁ à C₄, alcoxy en C₁ à C₄, halogéno ou nitro, une groupe pyridylcarbonyle ou thiénylcarbonyle, et
un des deux résidus A ou E représente un atome d'azote et l'autre un résidu de formule C-R⁷ dans laquelle R⁷ représente un groupe alkyle en C₁ à C₁₀, qui est éventuellement substitué par un groupe phényle, phénoxy, cyclohexyloxy ou pyrazolyle et qui peut être interrompu par 1 à 4 atomes d'oxygène dans une fonction éther, cycloalkyle en C₅ à C₇, un groupe phényle éventuellement substitué par un groupe alkyle en C₁ à C₄, alcoxy en C₁ à C₄, halogéno ou nitro,
ainsi qu'un ou plusieurs colorants anthraquinone de formule III 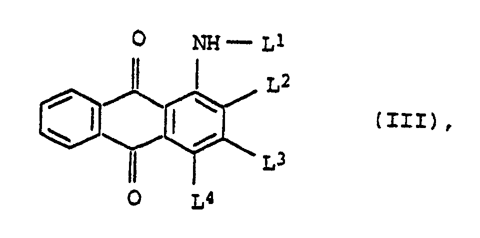 dans laquelle
L¹ représente un atome d'hydrogène, un groupe alkyle en C₁ à C₁₀ ou un groupe phényle éventuellement substitué par un groupe alkyle en C₁ à C₄, alcoxy en C₁ à C₄, halogéno ou nitro,
L² et L³ représentent chacun indépendamment l'un de l'autre, un atome d'hydrogène, un groupe alcoxy en C₁ à C₁₀ éventuellement substitué par un groupe phényle ou (alkyle en C₁ à C₄)-phényle, alkylthio en C₁ à C₁₀ éventuellement substitué par un groupe phényle, halogéno, hydroxyphényle, (alcoxy en C₁ à C₄)-phényle ou un résidu de formule 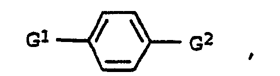 dans laquelle G¹ représente un atome d'oxygène ou de soufre et G² représente un atome d'hydrogène ou un groupe monoalkylsulfamoyle en C₁ à C₈, dont la chaîne alkyle peut être interrompue par 1 ou 2 atomes d'oxygène dans une fonction éther, et
L⁴ représente un groupe amino, hydroxy ou alkylthio en C₁ à C₁₀ éventuellement substitué par un groupe phényle.

2. Mélanges de colorants selon la revendication 1, **caractérisés en ce que** R⁴ représente un groupe méthyle.

3. Mélanges de colorants selon la revendication 1, **caractérisés en ce que** R³ représente un groupe alkyle en C₃ à C₁₀, phényle ou thiényle.

4. Mélanges de colorants selon la revendication 1, **caractérisés en ce que** R⁶ représente un groupe alkyle en C₁ à C₈, cyclopentyle, cyclohexyle ou un groupe phényle éventuellement substitué par un groupe alkyle en C₁ à C₄ ou alcoxy en C₁ à C₄.

5. Mélanges de colorants selon la revendication 1, **caractérisés en ce que** R⁷ représente un groupe alkyle en C₁ à C₁₀ ou un groupe phényle éventuellement substitué par un groupe alkyle en C₁ à C₄ ou alcoxy en C₁ à C_{4.}

6. Mélanges de colorants selon la revendication 1, **caractérisés en ce que** L¹ représente un atome d'hydrogène et L⁴ représente un groupe hydroxy et L² et L³ prennent chacun les significations indiquées dans la revendication 1.

7. Mélanges de colorants selon la revendication 1, contenant en plus, un ou plusieurs colorants azoïques dont les composants diazoïques proviennent de la série des aminoisothiazoles ou des anilines et dont les composants de couplage proviennent de la série des aminoisothiazoles ou des anilines ou des tétrahydroquinoléines.

8. Procédé pour transférer des colorants à partir d'un support sur un papier revêtu de matière plastique, par diffusion ou sublimation à l'aide d'une source d'énergie, **caractérisé en ce que** l'on emploie un support sur lequel se trouve un mélange de colorants selon la revendication 1.
